# EUROPEAN PATENT APPLICATION

(11) **EP 2 941 052 A1**
(43) Date of publication of application: **04.11.2015**
(21) Application number: 13868895.7
(22) Date of filing: 25.09.2013
(51) Int. Cl.: H04W 36/14

(54) **METHOD AND DEVICE FOR SENDING IDENTIFIER INFORMATION AND CALL SWITCHING REQUEST**

(30) Priority: 31.12.2012 CN 201210590129
(71) Applicant: ZTE Corporation, Shenzhen, Guangdong 518057 (CN)
(72) Inventor: MENG, Lingcai, Shenzhen Guangdong 518057 (CN); PAN, Hongbing, Shenzhen Guangdong 518057 (CN); ZOU, Changle, Shenzhen Guangdong 518057 (CN)
(74) Representative: Mozzi, Matteo
(86) International application number: PCT/CN2013/084233
(87) International publication number: WO 2014/101500

(57) **Abstract**

Provided are a method and device for sending identifier information or a call transfer request. The method for sending a call transfer request includes: determining that a call for which a UE initiates a transfer in a PS domain to a CS domain includes an emergency call; acquiring identifier information of an EATF to which the UE is anchored when initiating the emergency call; and initiating transfer of the emergency call of the UE in the CS domain according to the identifier information. By means of the technical solution, the problem that an emergency call cannot be transferred in a case of networking of multiple service domains is solved, and the effect of ensuring that transfer of the emergency call can be completed is further achieved.

## Description

### Technical Field

The present disclosure relates to the field of communications, and in particular to a method and device for sending identifier information or a call transfer request.

### Background

An IP multimedia core network subsystem (IMS) is an Internet protocol (IP)-based network architecture provided by the 3rd generation partnership project (3GPP) organization. The IMS constructs an open and flexible service environment which supports multimedia applications, and provides a variety of multimedia services for users.

The 3GPP standard organization studied a single radio voice call continuity (SRVCC) technology and released a number of specifications, which describe an establishment process of an emergency call of an SRVCC user in a packet switched (PS) domain, and a process of transferring from the PS domain to a circuit switched (CS) domain. An emergency access transfer function entity (EATF) is responsible for anchoring and transferring of an emergency call. A parameter identifying an EATF network element is an emergency session transfer number for SRVCC (E-STN-SR), and a call transfer request can be sent to a correct EATF according to this parameter.

A user equipment (UE) initiates or does not initiates PS domain registration, and initiates an emergency call. The emergency call is successfully established by going through radio-xGW (radio gateway)--proxy call session control function (P-CSCF)--emergency call session control function (E-CSCF)--EATF. When SRVCC emergency call transfer of the UE occurs and the UE moves to a target CS domain, a mobile switching center (MSC) server in the target CS domain sends the transfer request to a corresponding EATF according to the E-STN-SR configured locally, so that the EATF controls the call and executes a transfer flow.

In the specifications released by the 3GPP, when an SRVCC emergency call transfer occurs, the MSC routes the transfer request to the EATF according to the E-STN-SR configured locally in a static manner. However, there are multiple service domains in an IMS network, and in a case where each service domain is deployed with an EATF network element, there are also multiple E-STN-SRs which are in one-to-one correspondence with the EATF elements. When an emergency call (EMC) SRVCC transfer to a target service domain occurs to the UE, the locally configured E-STN-SR of the MSC server in the target service domain may be different from the E-STN-SR in an initial service domain (also referred to as a source service domain), which will result in the transfer request being not able to be routed to the correct EATF, thereby failing to complete the call transfer.

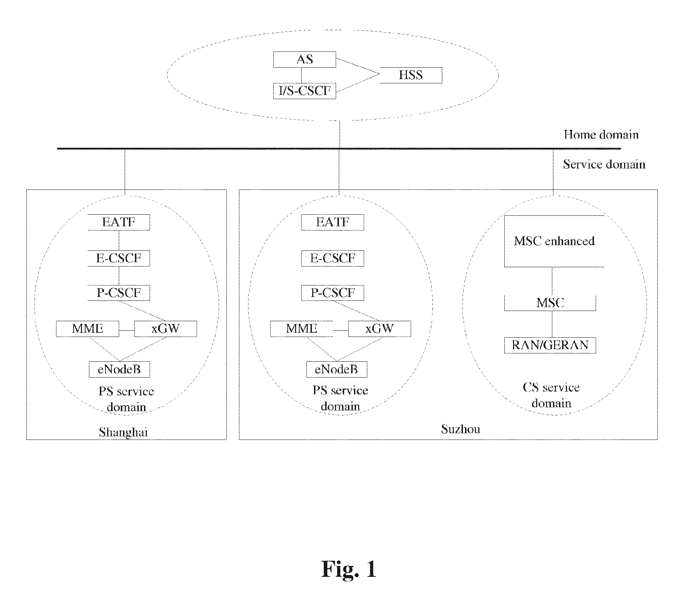

For example, in the networking of multiple service domains as shown in Fig. 1, an E-STN-SR configured locally by an MSC server of Suzhou points towards an EATF of Suzhou. When the UE initiates an emergency call from a PS service domain of Shanghai, this call is anchored to the EATF of Shanghai. When the UE moves to a CS service domain of Suzhou, the MSC server of Suzhou initiates a call transfer request, wherein an Request URI of this transfer request is filled with a statically configured E-STN-SR, and the call will finally be sent to the EATF of Suzhou, rather than the EATF of Shanghai, which results in failing to complete the call transfer, and the emergency call being interrupted.

### Summary

With regard to the problem that an emergency call cannot be transferred in networking of multiple service domains, the embodiments of the present disclosure provide a method and device for sending identifier information or a call transfer request, to at least solve the above-mentioned problems.

According to one aspect of the embodiments of the present disclosure, a method for sending identifier information is provided, including: determining that a UE moves from a first access network element of a source PS domain to a second access network element of a target PS domain; and sending identifier information of an EATF to the above-mentioned second access network element, wherein the identifier information of the EATF sent to the second access network element is that configured on the above-mentioned first access network element.

In an example embodiment, after sending the identifier information of the EATF to the above-mentioned second access network element, wherein the identifier information of the EATF sent to the second access network element is that configured on the above-mentioned first access network element, the method further includes: receiving, by the above-mentioned second access network element, the above-mentioned identifier information; and in a case where the above-mentioned UE moves from the above-mentioned first access network element to a third access network element of a next PS domain, sending, by the above-mentioned second access network element, the above-mentioned identifier information to the above-mentioned third access network element.

In an example embodiment, the above-mentioned method further includes: receiving and storing, by the above-mentioned second access network element, the above-mentioned identifier information; and in a case where the above-mentioned UE ends a call or moves to a third access network element of a next PS domain, deleting, by the above-mentioned second access network element, the above-mentioned identifier information.

In an example embodiment, before sending the identifier information of the EATF to the above-mentioned second access network element, wherein the identifier information of the EATF sent to the second access network element is that configured on the above-mentioned first access network element, the method further includes: determining that the above-mentioned UE has an emergency call.

In an example embodiment, the above-mentioned first access network element and the above-mentioned second access network element include: a mobile management entity (MME) or a serving general packet radio service support node (SGSN).

According to another aspect of the embodiments of the present disclosure, a method for sending identifier information is provided, including: determining that an emergency call initiated by a UE in a PS domain is transferred to a target CS domain; and sending identifier information of an EATF, to which the UE is anchored when initiating the emergency call, to an access network element of the above-mentioned target CS domain.

In an example embodiment, the above-mentioned method further includes: receiving, by the access network element of the above-mentioned CS domain, the above-mentioned identifier information; and initiating, by the access network element of the above-mentioned CS domain, emergency call transfer of the above-mentioned UE in the CS domain according to the above-mentioned identifier information.

In an example embodiment, an access network element of the above-mentioned PS domain includes: an MME or an SGSN; and the access network element of the above-mentioned CS domain includes: an MSC.

According to yet another aspect of the embodiments of the present disclosure, a method for transferring an emergency call is provided, including: determining that a call for which a UE initiates a transfer in a PS domain to a CS domain includes an emergency call; acquiring identifier information of an EATF to which the above-mentioned UE is anchored when initiating the emergency call; and initiating emergency call transfer of the above-mentioned UE in the above-mentioned CS domain according to the above-mentioned identifier information.

In an example embodiment, initiating emergency call transfer of the above-mentioned UE according to the above-mentioned identifier information includes: sending an emergency call transfer request of the above-mentioned UE to an EATF corresponding to the above-mentioned identifier information.

In an example embodiment, acquiring the identifier information of the EATF to which the above-mentioned UE is anchored when initiating the emergency call includes: receiving the above-mentioned identifier information sent by an access network element of the above-mentioned PS domain.

In an example embodiment, the above-mentioned method further includes: in a case where the above-mentioned UE leaves the above-mentioned CS domain or the above-mentioned emergency call is ended, deleting the above-mentioned identifier information.

According to yet another aspect of the embodiments of the present disclosure, a method for acquiring identifier information is provided, including: acquiring, by an MME, identifier information of an EATF corresponding to the above-mentioned MME from an access transfer control function (ATCF).

In an example embodiment, acquiring, by an MME, the identifier information of the EATF corresponding to the above-mentioned MME from an ATCF includes: sending, by the above-mentioned ATCF, the above-mentioned identifier information to a home subscriber server (HSS) via a service centralization and continuity application server (SCC AS); sending, by the above-mentioned HSS, the above-mentioned identifier information to the above-mentioned MME; and receiving, by the above-mentioned MME, the above-mentioned identifier information.

In an example embodiment, before sending, by the above-mentioned ATCF, the above-mentioned identifier information to the HSS via the SCC AS, the method further includes: receiving, by the above-mentioned ATCF, a register message sent by a user equipment (UE).

According to yet another aspect of the embodiments of the present disclosure, an MME is provided, including: a first determination component, configured to determine that a UE moves from a first access network element of a source PS domain to a second access network element of a target PS domain; and a sending component, configured to send identifier information of an EATF to the above-mentioned second access network element, wherein the identifier information of the EATF sent to the second access network element is that configured on the above-mentioned first access network element.

In an example embodiment, the above-mentioned MME further includes: a second determination component, configured to determine that the above-mentioned UE has an emergency call before the sending component sends the above-mentioned identifier information.

According to yet another aspect of the embodiments of the present disclosure, an MME is provided, including: a determination component, configured to determine that an emergency call initiated by a UE in a PS domain is transferred to a target CS domain; and a sending component, configured to send identifier information of an EATF, to which the UE is anchored when initiating the emergency call, to an access network element of the above-mentioned target CS domain.

According to still another aspect of the embodiments of the present disclosure, an MSC is provided, including: a determination component, configured to determine that a call for which a UE initiates a transfer in a PS domain to a CS domain includes an emergency call; an acquisition component, configured to acquire identifier information of an EATF to which the above-mentioned UE is anchored when initiating the emergency call; and a transferring component, configured to initiate emergency call transfer of the above-mentioned UE in the above-mentioned CS domain according to the above-mentioned identifier information.

In an example embodiment, the above-mentioned transferring component is configured to send an emergency call transfer request of the above-mentioned UE to an EATF corresponding to the above-mentioned identifier information.

In an example embodiment, the above-mentioned acquisition component is configured to receive the above-mentioned identifier information sent by an access network element of the above-mentioned PS domain.

In an example embodiment, the above-mentioned MSC further includes: a deleting component, configured to delete, in a case where the above-mentioned UE leaves the above-mentioned CS domain or the above-mentioned emergency call is ended, the above-mentioned identifier information.

By means of the embodiments of the present disclosure, it is determined that a call for which a UE initiates a transfer in a PS domain to a CS domain includes an emergency call; identifier information of the EATF to which the UE is anchored when initiating the emergency call is acquired; and emergency call transfer of the UE is initiated in the CS domain according to the identifier information. The problem that an emergency call cannot be transferred in a case of networking of multiple service domains is solved, and the effect of ensuring that transfer of the emergency call can be completed is further achieved.

### Brief Description of the Drawings

Drawings, provided for further understanding of the present disclosure and forming a part of the specification, are used to explain the present disclosure together with embodiments of the present disclosure rather than to limit the present disclosure. In the accompanying drawings:
Fig. 1 is a schematic diagram showing the networking of multiple service domains according to relevant art;
Fig. 2 is structural block diagram I of an MME according to an embodiment of the present disclosure;
Fig. 3 is flowchart I of a method for sending identifier information according to an embodiment of the present disclosure;
Fig. 4 is structural block diagram II of an MME according to an embodiment of the present disclosure;
Fig. 5 is flowchart II of a method for sending identifier information according to an embodiment of the present disclosure;
Fig. 6 is a structural block diagram of an MSC according to an embodiment of the present disclosure;
Fig. 7 is a flowchart of a method for transferring an emergency call according to an embodiment of the present disclosure;
Fig. 8 is a flowchart of an E-STN-SR delivery method in scenario I according to an embodiment of the present disclosure;
Fig. 9 is a flowchart of an E-STN-SR delivery method in scenario II according to an embodiment of the present disclosure;
Fig. 10 is a flowchart of an E-STN-SR delivery method in scenario III according to an embodiment of the present disclosure; and
Fig. 11 is flowchart of an example method for acquiring identifier information according to an embodiment of the present disclosure.

### Detailed Description of the Embodiments

The present disclosure is described below with reference to the drawings and embodiments in detail. It should be noted that the embodiments of the present application and the characteristics of the embodiments may be combined with each other if there is no conflict.

According to one aspect of an embodiment of the present disclosure, an MME is provided.

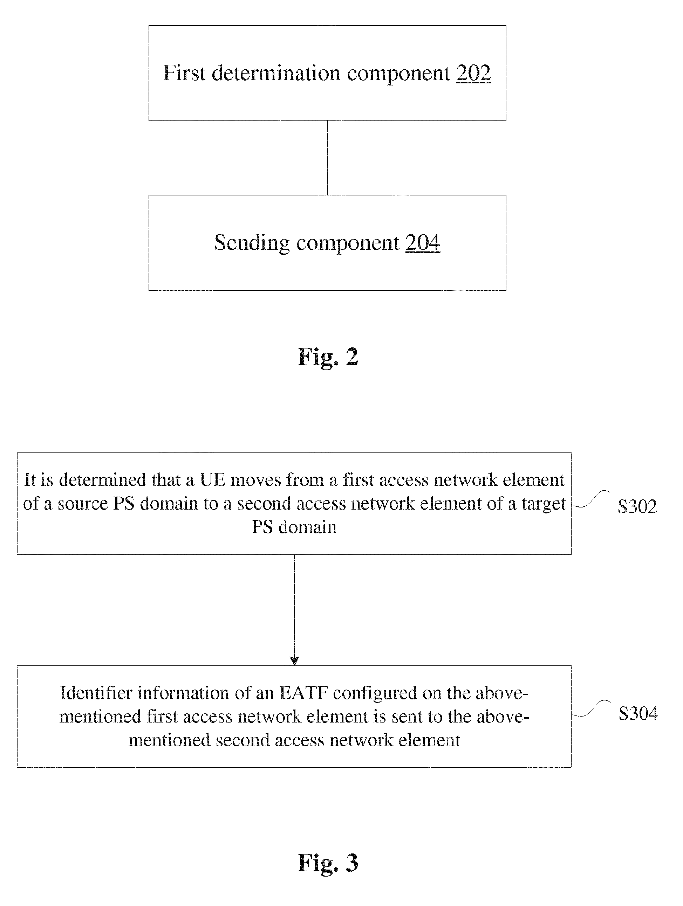

Fig. 2 is structural block diagram I of an MME according to an embodiment of the present disclosure. As shown in Fig. 2, the MME may include: a first determination component **202** and a sending component **204.** The first determination component **202** is configured to determine that a UE moves from a first access network element of a source PS domain to a second access network element of a target PS domain. The sending component **204,** coupled with the first determination component **202,** is configured to send identifier information of an EATF to the above-mentioned second access network element, wherein the identifier information of the EATF sent to the second access network element is that configured on the above-mentioned first access network element.

By means of the embodiment of the present disclosure, the determination component **202** determines that a UE moves from a first access network element of a source PS domain to a second access network element of a target PS domain; and the sending component **204** sends identifier information of an EATF to the above-mentioned second access network element, wherein the identifier information of the EATF sent to the second access network element is that configured on the above-mentioned first access network element, so that the access network element of the target CS domain is able to acquire the identifier information of the EATF to which the UE is anchored when initiating an emergency call so as to complete emergency call transfer and ensure that the emergency call is not interrupted.

In an example implementation of the embodiment of the present disclosure, the above-mentioned MME may further include: a second determination component, configured to determine that the above-mentioned UE has an emergency call before the sending component sends the above-mentioned identifier information. Of course, in practical applications, when it is determined that a UE transfers from a first access network element to a second access network element, the sending component **204** may directly send to the UE the above-mentioned identifier information, without judging whether the call is an emergency call.

According to an embodiment of the present disclosure, corresponding to the above-mentioned MME, a method for sending identifier information is further provided.

Fig. 3 is flowchart I of a method for sending identifier information according to an embodiment of the present disclosure. As shown in Fig. 3, the method includes step S302 to step S304.

Step S302, it is determined that a UE moves from a first access network element of a source PS domain to a second access network element of a target PS domain.

Step S302, identifier information of an EATF is sent to the above-mentioned second access network element, wherein the identifier information of the EATF sent to the above-mentioned second access network element is that configured on the above-mentioned first access network element.

By means of the embodiment of the present disclosure, it is determined that a UE moves from a first access network element of a source PS domain to a second access network element of a target PS domain; and identifier information of an EATF configured on the above-mentioned first access network element is sent to the above-mentioned second access network element, so that the access network element of the target CS domain is able to acquire identifier information of the EATF to which the UE is anchored when initiating an emergency call so as to complete emergency call transfer and ensure that the emergency call is not interrupted.

In an example implementation of the embodiment of the present disclosure, after sending the identifier information of the EATF to the above-mentioned second access network element, wherein the identifier information of the EATF sent to the second access network element is that configured on the above-mentioned first access network element, the above-mentioned second access network element receives the above-mentioned identifier information. In addition, in a case where the above-mentioned UE moves from the above-mentioned first access network element to a third access network element of the next PS domain, the above-mentioned second access network element may send the above-mentioned identifier information to the above-mentioned third access network element.

In an example embodiment, the above-mentioned second access network element may receive and store the above-mentioned identifier information, for example, the above-mentioned identifier information is stored in the context of the UE. In a case where the above-mentioned UE ends a call or moves to the above-mentioned third access network element of the next PS domain, the above-mentioned second access network element may delete the above-mentioned identifier information.

In an example implementation of the embodiment of the present disclosure, before sending the identifier information of the EATF to the above-mentioned second access network element, wherein the identifier information of the EATF sent to the second access network element is that configured on the above-mentioned first access network element, it is further determined that the above-mentioned UE has an emergency call. If there is an emergency call, the above-mentioned identifier information is sent; and if not, the above-mentioned identifier information is not sent.

In the embodiment of the present disclosure, the above-mentioned first access network element and the above-mentioned second access network element may include but is not limited to an MME and an SGSN.

According to an embodiment of the present disclosure, another MME is further provided.

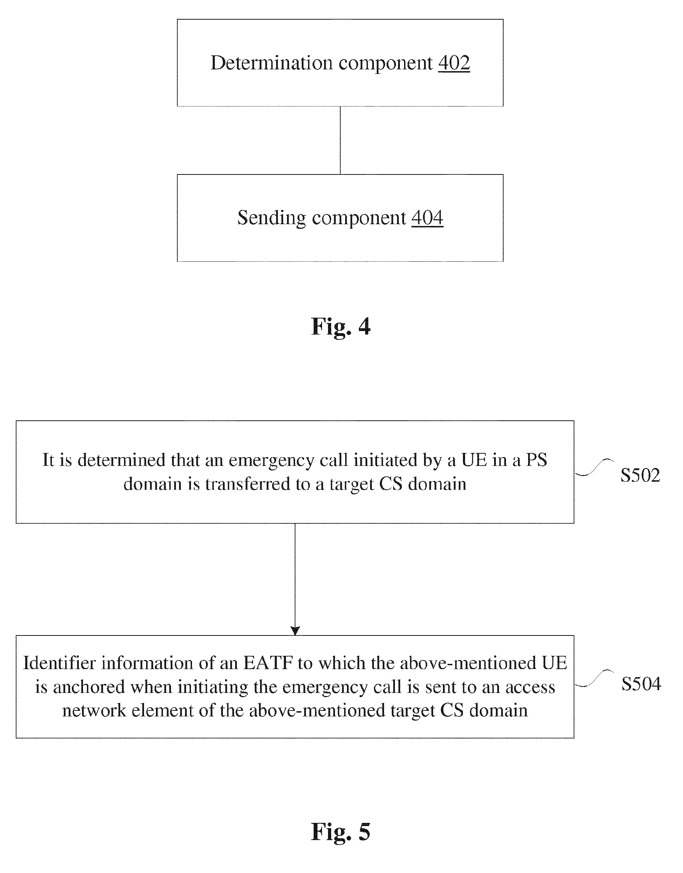

Fig. 4 is structural block diagram II of an MME according to an embodiment of the present disclosure. As shown in Fig. 4, the MME may include: a determination component **402** and a sending component **404.** The determination component **402** is configured to determine that an emergency call initiated by a UE in a PS domain is transferred to a target CS domain; and a sending component **404** is configured to send identifier information of an EATF, to which the UE is anchored when initiating the emergency call, to an access network element of the above-mentioned target CS domain.

By means of the embodiment of the present disclosure, an access network element of a target CS domain is able to acquire identifier information of the EATF to which the UE is anchored when initiating an emergency call so as to complete emergency call transfer and ensure that the emergency call is not interrupted.

According to an embodiment of the present disclosure, corresponding to the above-mentioned MME, a method for sending identifier information is further provided.

Fig. 5 is flowchart II of a method for sending identifier information according to an embodiment of the present disclosure. As shown in Fig. 5, the method includes step S502 to step S504.

Step S502, it is determined that an emergency call initiated by a UE in a PS domain is transferred to a target CS domain.

Step S504, identifier information of an EATF to which the above-mentioned UE is anchored when initiating the emergency call is sent to an access network element of the above-mentioned target CS domain.

By means of the embodiment of the present disclosure, an access network element of a target CS domain is able to acquire identifier information of the EATF to which the UE is anchored when initiating an emergency call so as to complete emergency call transfer and ensure that the emergency call is not interrupted.

In the embodiment of the present disclosure, after sending the above-mentioned identifier information to the access network element of the above-mentioned target CS domain, the access network element of the above-mentioned CS domain may receive the above-mentioned identifier information, and initiate emergency call transfer of the above-mentioned UE in the CS domain according to the above-mentioned identifier information.

In an example implementation of the embodiment of the present disclosure, an access network element of the above-mentioned PS domain may include but is not limited to: an MME or an SGSN; and the access network element of the above-mentioned CS domain includes but is not limited to: an MSC.

According to an embodiment of the present disclosure, corresponding to the above-mentioned MME and method for sending identifier information, an MSC is further provided.

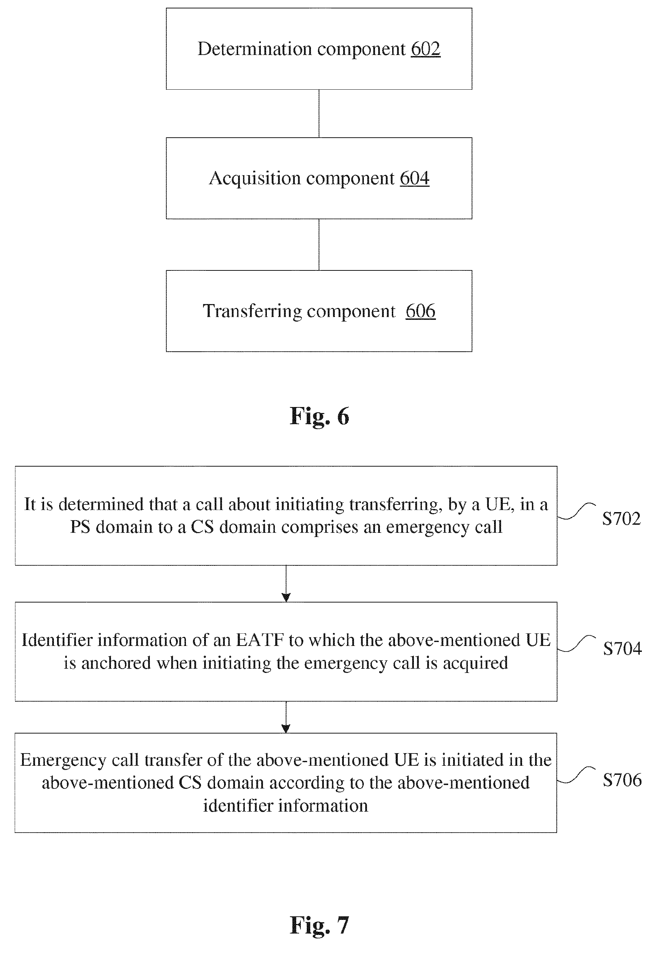

Fig. 6 is a structural block diagram of an MSC according to an embodiment of the present disclosure. As shown in Fig. 6, the MSC may include: a determination component **602,** an acquisition **604** and a transferring component **606.** The determination component **602** is configured to determine that a call for which a UE initiates a transfer in a PS domain to a CS domain includes an emergency call; an acquisition component **604,** coupled with the determination component **602,** is configured to acquire identifier information of an EATF to which the above-mentioned UE is anchored when initiating the emergency call; and a transferring component **606,** coupled with the acquisition component **604,** is configured to initiate emergency call transfer of the above-mentioned UE in the above-mentioned CS domain according to the above-mentioned identifier information.

By means of the embodiments of the present disclosure, an access network element of a target CS domain is able to acquire identifier information of an EATF to which a UE is anchored when initiating the emergency call, thus solving the problem that an emergency call cannot be transferred in a case of networking of multiple service domains, and the effect of ensuring that transfer of the emergency call can be completed is further achieved.

In the embodiment of the present disclosure, the above-mentioned transferring component **606** may be configured to send an emergency call transfer request of the above-mentioned UE to an EATF corresponding to the above-mentioned identifier information.

In the embodiment of the present disclosure, the above-mentioned acquisition component **604** may be configured to receive the above-mentioned identifier information sent by an access network element of the above-mentioned PS domain.

In an example embodiment, the above-mentioned MSC further includes: a deleting component, configured to delete, in a case where the above-mentioned UE leaves the above-mentioned CS domain or the above-mentioned emergency call is ended, the above-mentioned identifier information.

According to an embodiment of the present disclosure, corresponding to the above-mentioned MSC, a method for transferring an emergency call is further provided.

Fig. 7 is a flowchart of a method for transferring an emergency call according to the embodiment of the present disclosure. As shown in Fig. 7, the method includes step S702 to step S706.

Step S702, it is determined that a call for which a UE initiates a transfer in a PS domain to a CS domain includes an emergency call;

Step S704, identifier information of an EATF to which the above-mentioned UE is anchored when initiating the emergency call is acquired.

Step S706, emergency call transfer of the above-mentioned UE is initiated in the above-mentioned CS domain according to the above-mentioned identifier information.

In an example implementation of the embodiment of the present disclosure, initiating emergency call transfer of the above-mentioned UE according to the above-mentioned identifier information includes: sending an emergency call transfer request of the above-mentioned UE to an EATF corresponding to the above-mentioned identifier information.

In an example implementation of the embodiment of the present disclosure, acquiring the identifier information of the EATF to which the above-mentioned UE is anchored when initiating the emergency call includes: receiving the above-mentioned identifier information sent by an access network element of the above-mentioned PS domain.

In an example embodiment, in a case where the above-mentioned UE leaves the above-mentioned CS domain or the above-mentioned emergency call is ended, the above-mentioned identifier information may be deleted.

The above-mentioned method will now be explained by taking a UE transferring from a PS domain to a PS domain or a CS domain as an example.

A UE transfers from a first service domain to a second service domain, wherein access network elements of the first service domain and the second service domain are configured with different EATFs. In the process of the UE transferring from the first service domain to the second service domain, a first access network element of the first service domain sends identifier information of the EATF, to which the UE is anchored when initiating the emergency call, to a second access network element of the second service domain. The second access network element stores the received identifier information, and stores a corresponding relationship between the identifier information and the UE, for example, the identifier information may be added in the context of the UE.

The first access network element may be an MME when the UE initiated the emergency call (hereafter referred to as source MME), and may also be an MME being passed through during the transfer to the second access network element (hereafter referred to as intermediate MME). If the first access network element is the source MME, the identifier information sent by the first access network element is the identifier information EATF locally configured at the first access network element. If the first access network element is the intermediate MME, the identifier information sent by the first access network element is the identifier information delivered from the source MME.

In a case where the UE transfers between MMEs, the first access network element may directly deliver the identifier information of the EATF to which the UE is anchored when initiating the emergency call, or may also firstly judge whether the UE which initiates the transfer procedure has an emergency call, and if the UE has an emergency call, the first access network element delivers the above-mentioned identifier information to the second access network element. In practical applications, the first access network element may judge whether the UE has an emergency call via the following method: the first access network element detects whether the UE has an emergency voice bearer with QCI = 1 currently, and if the UE has an emergency voice bearer with QCI=1, then the UE has an emergency call.

When the UE transfers from a PS domain to another PS domain, i.e. when emergency call (EMC) PS-PS transfer occurs, the access network elements may be MMEs, and the first MME delivers the identifier information of the EATF, to which the UE is anchored when initiating the emergency call, to the second MME. When the UE moves from a PS domain to a CS domain, i.e. when the SRVCC EMC transfer occurs, the first MME delivers the identifier information of the EATF, to which the UE is anchored when initiating the emergency call, to an MSC server, so that the identifier information can be used for the transfer initiated in the CS domain.

When the UE leaves a target network area during the emergency call or the transferred emergency call is ended, an MME of the PS domain or/and an MSC of CS domain in the target network may delete identifier information corresponding to the UE.

A delivery process of the identifier information of the EATF to which the UE is anchored is described by taking several transferring scenarios as examples. In the following description, the identifier information takes an E-STN-SR as an example.

Scenario I, a UE moves from a source PS domain to a target CS domain.

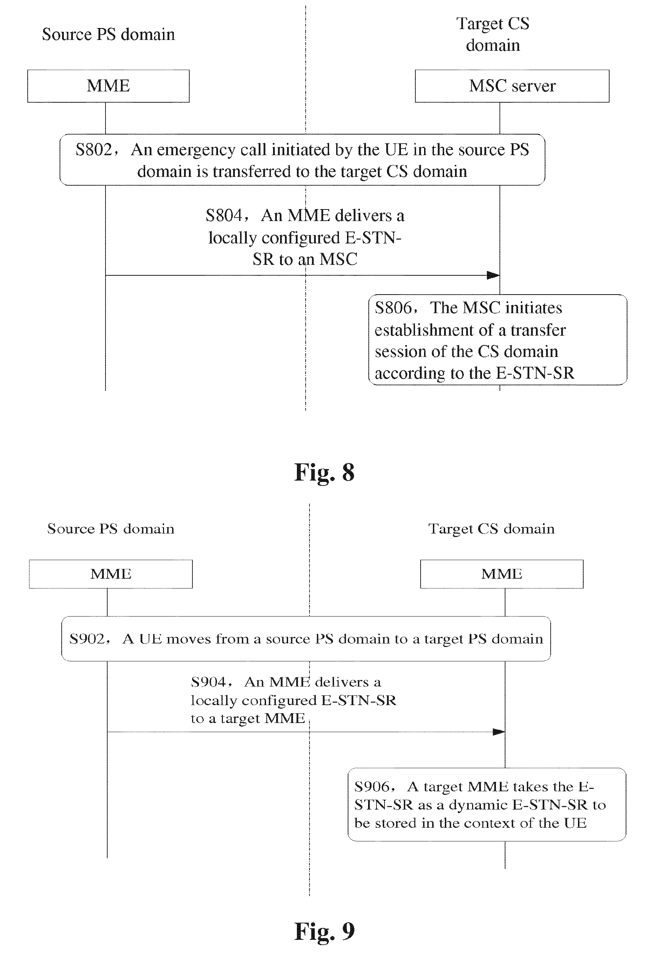

Fig. 8 is a flowchart of an E-STN-SR delivery method in scenario I according to an embodiment of the present disclosure. As shown in Fig. 8, the method includes step S802 to step S806.

Step S802, when a UE moves from a source PS domain to a target CS domain, an emergency call initiated by the UE in the source PS domain is transferred to the target CS domain, and SRVCC emergency call transfer occurs.

Step S804, an MME of the source PS domain delivers a local E-STN-SR to an MSC of the target CS domain.

Step S806, an MSC server uses the E-STN-SR to initiate an emergency call transfer request in the CS domain.

Scenario II, a UE moves from a source PS domain to a target PS domain.

Fig. 9 is a flowchart of an E-STN-SR delivery method in scenario II according to an embodiment of the present disclosure. As shown in Fig. 9, the method includes step S902 to step S906.

Step S902, a UE moves from a source PS domain to a target PS domain.

Step S904, an MME of the source PS domain delivers a local E-STN-SR to an MME of the target PS domain. In an example embodiment, the MME firstly judges whether the UE has an emergency voice bearer, and if the UE has the emergency voice bearer, the MME of the source PS domain delivers a local E-STN-SR to the MME of the target PS domain.

Step S906, the target MME takes the received E-STN-SR as a dynamic E-STN-SR to store same in the context of the UE.

In the embodiment of the present disclosure, a local E-STN-SR of the target MME is unaffected. If the UE moves from the target PS domain to a target CS domain, an emergency call single radio voice call continuity (EMC SRVCC) occurs, the target MME may sends an E-STN-SR when the UE initiates the emergency call to an MSC of the CS domain, and the MSC of the CS domain uses the E-STN-SR to initiate an emergency call transfer request in the CS domain.

Scenario III, a UE moves from a source PS domain to an intermediate PS domain, then continues to move to a target PS domain, and moves from the target PS domain to a target CS domain.

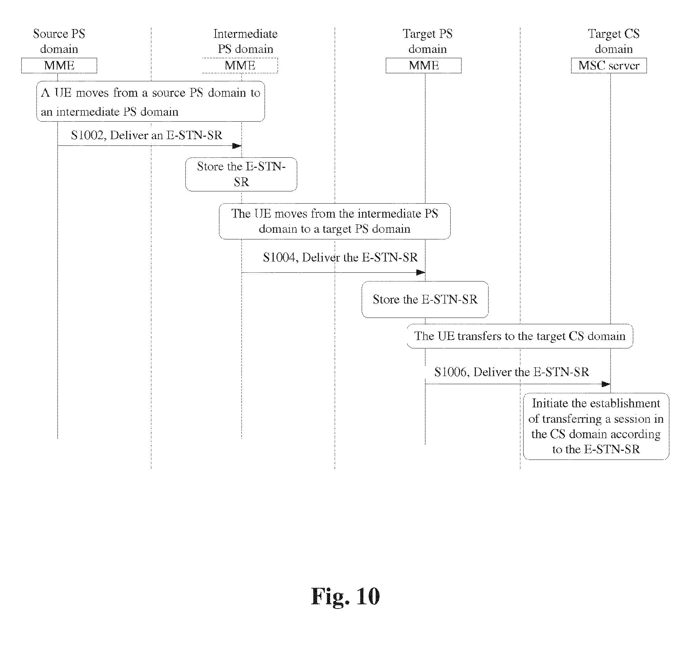

Fig. 10 is a flowchart of an E-STN-SR delivery method in scenario III according to an embodiment of the present disclosure. As shown in Fig. 10, the method includes step S1002 to step S1006.

Step S1002, a UE moves from a source PS domain to an intermediate PS domain, and an MME of the source PS domain delivers a local E-STN-SR to an MME of the intermediate PS domain.

In an example embodiment, the MME of the source PS domain may firstly judge whether the UE has an emergency voice bearer, and if the UE has the emergency voice bearer, the MME of the source PS domain delivers the E-STN-SR.

The MME of the intermediate PS domain takes the received E-STN-SR as a dynamic E-STN-SR to store same in the context of the UE. The local E-STN-SR is unaffected.

Step S1004, the UE then moves to the target PS domain, and the intermediate MME delivers the stored dynamic E-STN-SR to an MME of the target PS domain.

In an example embodiment, the intermediate MME may firstly judge whether the UE has an emergency voice bearer, and if the UE has the emergency voice bearer, the intermediate MME delivers the E-STN-SR.

The target MME takes the received E-STN-SR as a dynamic E-STN-SR to store same in the context of the UE. The local E-STN-SR is unaffected.

Step S1006, the UE moves from the target PS domain to a target CS domain, and an EMC SRVCC occurs. The MME of the target PS domain sends the dynamic E-STN-SR to an MSC of the target CS domain, and the MSC of the target CS domain uses the E-STN-SR to initiate an emergency call transfer request in the CS domain.

According to yet another aspect of the embodiments of the present disclosure, a method for acquiring identifier information is provided, and the method includes: acquiring, by an MME, identifier information of an EATF corresponding to the MME from an ATCF.

In an example implementation of the embodiment of the present disclosure, acquiring, by the MME, the identifier information of the EATF corresponding to the MME from the ATCF may include: sending, by the ATCF, identifier information to an HSS via an SCC AS, sending, by the HSS, the identifier information to the MME, and receiving, by the MME, the identifier information. In an example embodiment, in a case of receiving a register message sent by a user equipment (UE), the ATCF sends the identifier information to HSS.

Of course, the identifier information of the EATF corresponding to the MME may also be statically configured on the MME according to practical requirements.

In practical applications, the ATCF locally configures the E-STN-SR, which points towards a local EATF. The UE initiates a normal registration or an emergency registration in the PS domain; after receiving a register message sent by a P-CSCF, the ATCF fills the locally configured E-STN-SR in the register message, and sends same to the HSS via the SCC AS, and the HSS sends the E-STN-SR to the MME.

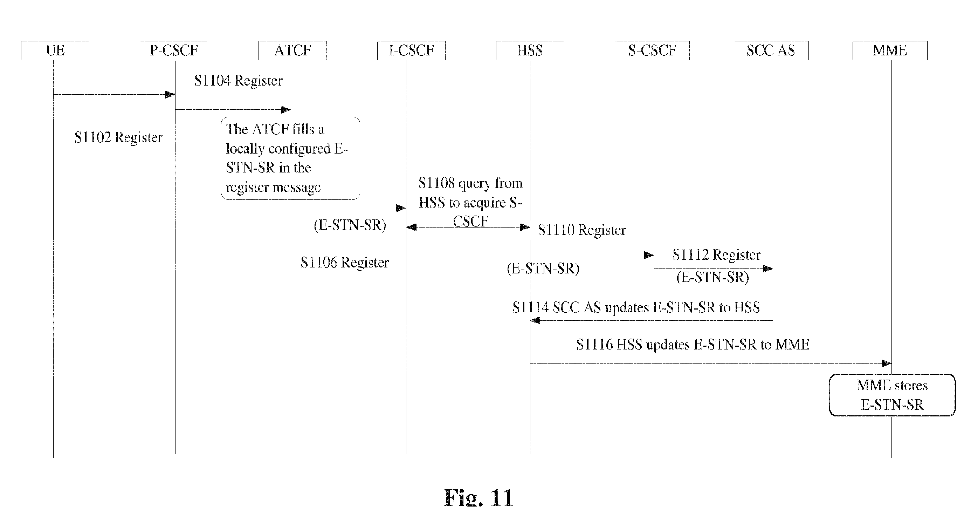

Fig. 11 is flowchart of an example method for acquiring identifier information according to an embodiment of the present disclosure. As shown in Fig. 11, the method includes step S 1102 to step S1116.

Step S 1102, a UE initiates a normal registration or an emergency registration in a PS domain, and sends a register message to a proxy-call session control function entity (P-CSCF).

Step S1104, the P-CSCF sends the register message to an ATCF.

Step S1106, the ATCF fills a locally configured E-STN-SR in the register message and sends same to an interrogating-call session control function (I-CSCF).

Step S1108, the I-CSCF queries from an HSS to acquire a serving-call session control function (S-CSCF).

Step S1010, the I-CSCF sends the register message to the S-CSCF, wherein the register message carries an E-STN-SR.

Step S1012, the S-CSCF triggers the register message to the SCC AS via a third party registration flow, wherein the register message carries the E-STN-SR.

Step S1114, the SCC AS updates the E-STN-SR to the HSS.

Step S1116, the HSS updates the E-STN-SR to an MME, the MME stores the parameter as a local E-STN-SR.

The ATCF and other network elements (e.g. P-CSCF) may be integrated into one network element, or may be separated in the implementation.

Obviously, those skilled in the art should know that each of the mentioned components or steps of the embodiments of the present disclosure can be realized by universal computing devices; the components or steps can be integrated on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. Thus, the embodiments of the present disclosure are not limited to any particular combination of hardware and software.

The above description is only example embodiments of the present disclosure and is not intended to limit the present disclosure, and the present disclosure can have a variety of changes and modifications for those skilled in the art. Any amendments, equivalent substitutions, improvements, etc. within the principle of the present disclosure are all included in the scope of the protection as defined by the appended claims of the present disclosure.

### Industrial Applicability

The technical solutions of the embodiments of the present disclosure may be applied in the field of multimedia applications, and the problem that an emergency call cannot be transferred in a case of networking of multiple service domains is solved, and the effect of ensuring that transfer of the emergency call can be completed is further achieved.

## Claims

1. A method for sending identifier information, **characterized by** comprising:
determining that a user equipment, UE, moves from a first access network element of a source packet switched, PS, domain to a second access network element of a target PS domain; and
sending identifier information of an emergency access transfer function entity, EATF, to the second access network element, wherein the identifier information of the EATF sent to the second access network element is that configured on the first access network element.

2. The method according to claim 1, **characterized in that** after sending the identifier information of the EATF to the second access network element, wherein the identifier information of the EATF sent to the second access network element is that configured on the first access network element, the method further comprises:
receiving, by the second access network element, the identifier information; and
in a case where the UE moves from the first access network element to a third access network element of a next PS domain, sending, by the second access network element, the identifier information to the third access network element.

3. The method according to claim 1 or 2, **characterized by** further comprising:
receiving and storing, by the second access network element, the identifier information; and
in a case where the UE ends a call or moves to a third access network element, deleting, by the second access network element, the identifier information.

4. The method according to any one of claims 1 to 3, **characterized in that** before sending the identifier information of the EATF to the second access network element, wherein the identifier information of the EATF sent to the second access network element is that configured on the first access network element, the method further comprises:
determining that the UE has an emergency call.

5. The method according to any one of claims 1 to 3, **characterized in that** the first access network element and the second access network element comprise: a mobile management entity, MME, or a serving general packet radio service support node, SGSN.

6. A method for sending identifier information, **characterized by** comprising:
determining that an emergency call initiated by a user equipment, UE, in a packet switched, PS, domain is transferred to a target circuit switched, CS, domain; and
sending identifier information of an emergency access transfer function entity, EATF, to which the UE is anchored when initiating the emergency call, to an access network element of the target CS domain.

7. The method according to claim 6, **characterized by** further comprising:
receiving, by the access network element of the CS domain, the identifier information; and
initiating, by the access network element of the CS domain, emergency call transfer of the UE in the CS domain according to the identifier information.

8. The method according to claim 6 or 7, **characterized in that** an access network element of the PS domain comprises: a mobile management entity, MME, or a serving general packet radio service support node, SGSN; and the access network element of the CS domain comprises: a mobile switching center, MSC.

9. A method for transferring an emergency call, **characterized by** comprising:
determining that a call for which a user equipment, UE, initiates a transfer in a packet switched, PS, domain to a circuit switched, CS, domain comprises an emergency call;
acquiring identifier information of an emergency access transfer function entity, EATF, to which the UE is anchored when initiating the emergency call; and
initiating emergency call transfer of the UE in the CS domain according to the identifier information.

10. The method according to claim 9, **characterized in that** initiating the emergency call transfer of the UE according to the identifier information comprises:
sending an emergency call transfer request of the UE to an EATF corresponding to the identifier information.

11. The method according to claim 9 or 10, **characterized in that** acquiring the identifier information of the EATF to which the UE is anchored when initiating the emergency call comprises:
receiving the identifier information sent by an access network element of the PS domain.

12. The method according to claim 11, **characterized by** further comprising:
in a case where the UE leaves the CS domain or the emergency call is ended, deleting the identifier information.

13. A method for acquiring identifier information, **characterized by** comprising:
acquiring, by a mobile management entity, MME, identifier information of an emergency access transfer function entity, EATF, corresponding to the MME from an access transfer control function, ATCF.

14. The method according to claim 13, **characterized in that** acquiring, by the MME, the identifier information of the EATF corresponding to the MME from the ATCF comprises:
sending, by the ATCF, the identifier information to a home subscriber server, HSS, via a service centralization and continuity application server, SCC AS;
sending, by the HSS, the identifier information to the MME; and
receiving, by the MME, the identifier information.

15. The method according to claim 14, **characterized in that** before sending, by the ATCF, the identifier information to the HSS via the SCC AS, the method further comprises:
receiving, by the ATCF, a register message sent by a user equipment, UE.

16. A mobile management entity, MME, **characterized by** comprising:
a first determination component, configured to determine that a user equipment, UE, moves from a first access network element of a source packet switched, PS, domain to a second access network element of a target PS domain; and
a sending component, configured to send identifier information of an emergency access transfer function entity, EATF, to the second access network element, wherein the identifier information of the EATF sent to the second access network element is that configured on the first access network element.

17. The MME according to claim 16, **characterized by** further comprising:
a second determination component, configured to determine that the UE has an emergency call before the sending component sends the identifier information.

18. A mobile management entity, MME, **characterized by** comprising:
a determination component, configured to determine that an emergency call initiated by a user equipment, UE, in a packet switched, PS, domain is transferred to a target circuit switched, CS, domain; and
a sending component, configured to send identifier information of an emergency access transfer function entity, EATF, to which the UE is anchored when initiating the emergency call, to an access network element of the target CS domain.

19. A mobile switching center, MSC, **characterized by** comprising:
a determination component, configured to determine that a call for which a user equipment, UE, initiates a transfer in a packet switched, PS, domain to a circuit switched, CS, domain comprises an emergency call;
an acquisition component, configured to acquire identifier information of an emergency access transfer function entity, EATF, to which the UE is anchored when initiating the emergency call; and
a transferring component, configured to initiate emergency call transfer of the UE in the CS domain according to the identifier information.

20. The MSC according to claim 19, **characterized in that** the transferring component is configured to send an emergency call transfer request of the UE to an EATF corresponding to the identifier information.

21. The MSC according to claim 19 or 20, **characterized in that** the acquisition component is configured to receive the identifier information sent by an access network element of the PS domain.

22. The MSC according to claim 21, **characterized by** further comprising:
a deleting component, configured to delete, in a case where the UE leaves the CS domain or the emergency call is ended, the identifier information.
